# EUROPÄISCHE PATENTSCHRIFT

(11) **EP 3 801 863 B1**
(45) Veröffentlichungstag und Bekanntmachung des Hinweises auf die Patenterteilung: **08.04.2026**
(21) Anmeldenummer: 19726357.7
(22) Anmeldetag: 20.05.2019
(51) Int. Cl.: B01J 2/16, B01J 8/10, B01J 8/18, B01J 8/38, B01J 8/44

(54) **FLUIDISIERUNGSAPPARAT MIT EINEM ANSTRÖMBODEN**
FLUIDISING APPARATUS WITH A DISTRIBUTOR PLATE
APPAREIL DE FLUIDISATION AVEC UNE PLAQUE DE DISTRIBUTION

(30) Priorität: 06.06.2018 DE 102018208932
(43) Veröffentlichungstag der Anmeldung: 14.04.2021
(73) Patentinhaber: Glatt Gesellschaft mit beschränkter Haftung, 79589 Binzen (DE)
(72) Erfinder: ZIMMERMANN, Dirk, 79664 Wehr (DE)
(74) Vertreter: Patentanwälte Magenbauer & Kollegen Partnerschaft mbB
(86) Internationale Anmeldenummer: PCT/EP2019/062948
(87) Internationale Veröffentlichungsnummer: WO 2019/233748

(56) Entgegenhaltungen:
- WO-A1-2014/117577
- WO-A2-2014/161525
- CH-A5- 645 036
- DD-A5- 293 738
- US-A1- 2011 180 157

## Beschreibung

Die Erfindung betrifft einen Fluidisierungsapparat aufweisend einen für Prozessluft durchlässigen Anströmboden mit Öffnungen für die durch den Anströmboden strömende Prozessluft, wobei der Anströmboden um eine Achse des Fluidisierungsapparates drehbar in dem Fluidisierungsapparat angeordnet ist und diesen in eine Verteilerkammer und eine Wirbelkammer unterteilt, und wobei der Anströmboden des Fluidisierungsapparates zumindest eine erste und eine zweite Anströmbodenplatte aufweist, wobei eine der Anströmbodenplatten an ihrem äußeren Ende ein Dichtelement aufweist oder ausbildet.

Anströmboden sind für Fluidisierungsapparate, insbesondere für klassische Wirbelschichtapparate, seit langem Stand der Technik. In den beiden internationalen Patentanmeldungen WO 2014/161525 A2 und WO 2014/117577 A1 wird ein kontinuierlich arbeitender Wirbelschichtapparat offenbart, wobei der Anströmboden drehbar im Wirbelschichtapparat angeordnet ist. Bisher wird bei insbesondere kontinuierlich betriebenen Fluidisierungsapparaten der drehbare Anströmboden exakt auf Maß gefertigt, sodass ein zwischen Anströmboden und Außenwand des Fluidisierungsapparates auftretender Ringspalt eine minimale Spaltbreite aufweist. Dieser nach dem Labyrinth-Prinzip wirkende Dichtungsmechanismus ist notwendig, da ansonsten die Prozessluft nicht durch die Öffnungen des Anströmbodens, sondern durch den vorgenannten Ringspalt zwischen Anströmboden und Außenwand des Fluidisierungsapparates strömt.

Nachteilig an den im Stand der Technik dargestellten technischen Lösungen ist, dass diese einen hohen Fertigungsaufwand sowie eine große Präzision bei der Herstellung der einzelnen Bauteile des Fluidisierungsapparates aufgrund kleiner Fertigungstoleranzen, insbesondere des Anströmbodens und der an den Anströmboden angrenzenden Außenwand des Fluidisierungsapparates, verlangen ohne den auftretenden Ringspalt in ausreichendem Maß abzudichten. Zudem haben die bisher verwendeten Dichtmechanismen den Nachteil, dass diese einen sehr hohen Verschleiß der Bauteile zeigen.

Die Patentanmeldung US 2011/180157 A1 offenbart einen mehrteiligen Anströmboden, wobei der Anströmboden in einem Fluidisierungsapparat angeordnet ist, und wobei der obere Anströmboden an seinem äußeren Ende einen Flansch aufweist, der eine Dichtungsfunktion hat.

Die Patentanmeldung DD 293 738 A5 offenbart einen Fluidisierungsapparat mit einem drehbar gelagertem Anströmboden, der einen Siebbodenring für den Durchfluss von Prozessluft aufweist und dessen Umfang mit der Behälterwand des Fluidisierungsapparates einen Ringspalt bildet.

Es ist daher die Aufgabe der vorliegenden Erfindung, einen Fluidisierungsapparat mit einem Anströmboden bereitzustellen, wobei ein Ringspalt zwischen dem Anströmboden und der Außenwand des Fluidisierungsapparates verbessert abgedichtet ist und so die Nachteile aus dem Stand der Technik überkommen werden.

Diese Aufgabe wird bei einem Fluidisierungsapparat dadurch gelöst, dass zwischen Anströmboden und einer Innenwandung einer Außenwand des Fluidisierungsapparates ein Ringspalt ausgebildet ist und das Dichtelement über einen Umfang am äußeren Ende der einen Anströmbodenplatte angeordnet oder ausgebildet ist, sodass das Dichtelement den Ringspalt abdichtet. Vorteilhafterweise wird durch den erfindungsgemäßen Anströmboden eine optimierte Abdichtung des Ringspalts zwischen dem äußeren Ende des Anströmbodens bzw. einer Anströmbodenplatte und einer Innenwandung der Außenwand des Fluidisierungsapparates erzielt. Zudem wird durch die verbesserte Abdichtung des Ringspalts erreicht, dass im Vergleich zum Stand der Technik mehr Prozessluft durch den Anströmboden selbst strömt, wodurch eine Fluidisierung des zu behandelnden Materials, insbesondere der zu behandelnden Partikel oder Granulate, verbessert wird. Darüber hinaus ist es möglich bei der Herstellung des Anströmbodens bzw. der einzelnen Anströmbodenplatten des Anströmbodens aufgrund größerer Fertigungstoleranzen im Vergleich zu den herkömmlichen Anströmböden von Fluidisierungsapparaten die Fertigung der einzelnen Bauteile zu vereinfachen und so den Fertigungsvorgang weiter zu optimieren. Zudem können andere Bauteile, bspw. Bauteile die einen einfachen Transport des zu behandelnden Materials in den Fluidisierungsapparat ermöglichen vorteilhaft an den Fluidisierungsapparat angeschlossen werden. Bevorzugt umfasst der Anströmboden des Fluidisierungsapparates drei Anströmbodenplatten. Gemäß dieser bevorzugten Ausführungsform des erfindungsgemäßen Anströmbodens hat die unterste Anströmbodenplatte, die auch als Unterboden des Anströmbodens bezeichnet wird, zwei Funktionen: Zum einen dient die unterste Anströmbodenplatte des Anströmbodens, die meist aus Stahl bzw. Edelstahl hergestellt ist, als Halterung für die mittlere Anströmbodenplatte, d.h. die mittlere Anströmbodenplatte ist an der unteren Anströmbodenplatte angeordnet und mit dieser verbunden, zum anderen wird die mittlere Anströmbodenplatte, die bevorzugt aus PTFE oder einem diesem ähnlichen Material hergestellt wird, durch den Unterboden stabilisiert. Die obere Anströmbodenplatte hat dagegen die Funktion, die mittlere Anströmbodenplatte zu beschweren, sodass diese nicht von der durch den Anströmboden strömenden Prozessluft angehoben und abgelöst wird und die Prozessluft an der Anströmbodenplatte vorbeiströmt, sondern dass die Prozessluft durch alle drei Anströmbodenplatten des erfindungsgemäßen Anströmbodens strömt.

Gemäß einer besonders bevorzugten Ausführungsform des erfindungsgemäßen Anströmbodens ist die eine ein Dichtelement ausbildende Anströmbodenplatte aus Polytetrafluorethylen hergestellt. Polytetrafluorethylen - auch als PTFE bezeichnet - weist einen sehr niedrigen Reibungskoeffizienten auf, wodurch die den Ringspalt zwischen Anströmboden und Außenwand des Fluidisierungsapparates abdichtende Anströmbodenplatte bei der Drehung des Anströmbodens zum Betrieb des Fluidisierungsapparates nur wenig belastet wird und der Verschleiß der das Dichtelement ausbildenden Anströmbodenplatte gering ist. Außerdem ist die Haftreibung genauso groß bzw. in etwa so groß wie die Gleitreibung, so dass der Übergang vom Stillstand des Anströmbodens beim Stillstand des Fluidisierungsapparates zur Bewegung bzw. Drehung des Anströmbodens beim Betrieb des Fluidisierungsapparates ohne "Ruck" stattfindet bzw., dass der sogenannte Stick-Slip-Effekt, d.h. ein Auftreten von "Ruckeln" während des Betriebs des Fluidisierungsapparates, vermieden wird. Hierdurch ist auch ein sehr langsames Drehen des Anströmbodens im Fluidisierungsapparat möglich.

Nach einer zusätzlichen Ausgestaltung des erfindungsgemäßen Anströmbodens sind die Anströmbodenplatten unbeweglich zueinander verbindbar oder verbunden. Vorteilhafterweise ist es hierdurch nicht möglich, dass sich die Anströmbodenplatten gegeneinander verschieben, sodass ein mittels der Anströmbodenplatten genau eingestellter Druckverlust über dem Anströmboden stets gleich groß ist und bleibt.

Des Weiteren weisen die Öffnungen der einzelnen Anströmbodenplatten des Anströmbodens bevorzugt eine unterschiedliche Durchtrittsfläche für die Prozessluft auf. Durch die unterschiedlich großen Öffnungen mit unterschiedlich großen Durchtrittsflächen für die Prozessluft in den einzelnen Anströmbodenplatten des erfindungsgemäßen Anströmbodens ist der Druckverlust über dem Anströmboden sehr genau einstellbar oder kann sehr genau eingestellt werden. Somit ist es möglich durch den Austausch einer Anströmbodenplatte den Anströmboden für den Einsatz in einem anderen Herstellungs- oder Behandlungsprozess einfach und schnell anzupassen. Darüber hinaus kann durch den Verzicht auf ein klassisches Siebgewebe die Perforation, d.h. die Öffnungen in den Anströmbodenplatten, des Anströmbodens optimal an die Kontur der einzelnen Prozesskammern angepasst werden. Hierdurch werden Toträume in den Prozesskammern deutlich verringert oder sogar vermieden.

Ganz besonders bevorzugt ist oder wird der Anströmboden für einen Fluidisierungsapparat verwendbar oder verwendet, wobei der Fluidisierungsapparat kontinuierlich betrieben wird. Vorteilhafterweise wird hierdurch gewährleistet, dass durch den kontinuierlichen Betrieb die Produktionskapazität und somit die Auslastung des Fluidisierungsapparates gesteigert wird.

Nachfolgend wird die Erfindung anhand der beiliegenden Zeichnung näher erläutert. Es zeigen
- Figur 1: eine Draufsicht auf einen Fluidisierungsapparat mit einem erfindungsgemäßen Anströmboden,
- Figur 2: eine Seitenansicht eines Teils eines Fluidisierungsapparates mit einem erfindungsgemäßen Anströmboden im Vollschnitt entlang der in Fig. 1 gezeigten Schnittachse A-A dar,
- Figur 3: eine Seitenansicht eines erfindungsgemäßen drei Anströmbodenplatten aufweisenden Anströmbodens im Vollschnitt entlang des in Fig. 1 gezeigten Schnittachse B-B,
- Figur 4: eine Draufsicht auf einen Teil einer oberen Anströmbodenplatte des in Fig. 3 dargestellten drei Anströmbodenplatten aufweisenden Anströmbodens,
- Figur 5: eine Untersicht auf einen Teil einer unteren Anströmbodenplatte des in Fig. 3 dargestellten drei Anströmbodenplatten aufweisenden Anströmbodens,
- Figur 6: eine Detailansicht einer in Ausschnitt X gemäß Fig. 2 gezeigten Befestigungsvorrichtung des erfindungsgemäßen Anströmbodens an einem Verdrängungskörper und
- Figur 7: eine perspektivische Darstellung eines drei Anströmbodenplatten aufweisenden Anströmbodens des Fluidisierungsapparates im Teilschnitt.

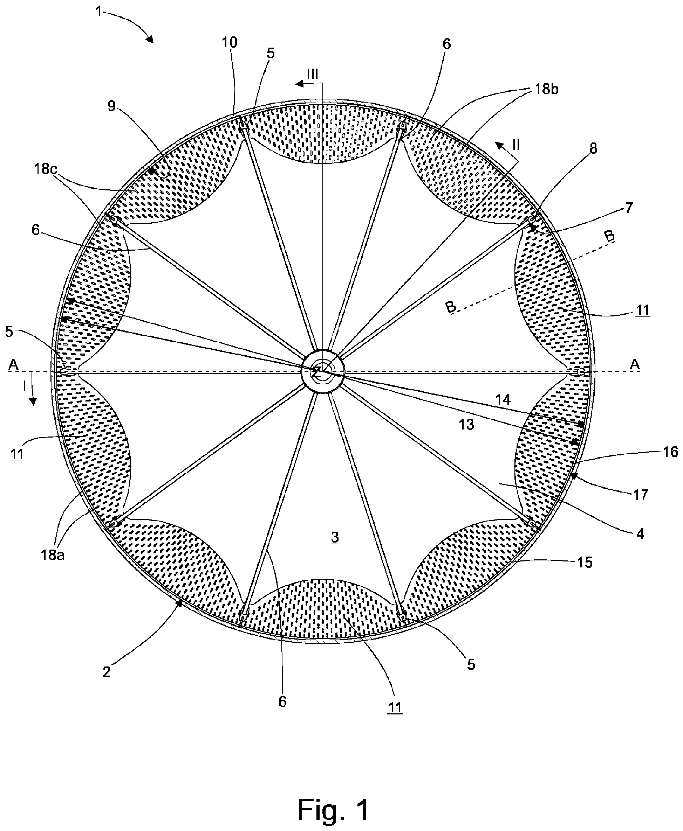

In Fig. 1 wird eine Draufsicht auf einen Fluidisierungsapparat 1 mit einem erfindungsgemäßen Anströmboden 2 gezeigt. Der Anströmboden 2 unterteilt den insbesondere kontinuierlich betriebenen Fluidisierungsapparat 1 in eine nicht gezeigte unter des Anströmbodens 2 angeordnete Verteilerkammer und eine oberhalb des Anströmbodens 2 angeordnete Wirbelkammer 3. Der erfindungsgemäße Anströmboden 2 umfasst einen Verdrängungskörper 4 sowie an dem Verdrängungskörper 4 angeordnete und mit dem Anströmboden 2 mittels Befestigungsmitteln 5 verbundene Trennwände 6. Die Trennwände 6 weisen zudem an ihrem äußeren Ende 7 einen Trennwandabschluss 8 auf. Der Trennwandabschluss 8 kann gerade sein oder eine gebogene Form aufweisen, insbesondere um die Innenwandung 9 der Außenwand 10 des Fluidisierungsapparates 1 abzuschaben und so von Anbackungen zu befreien. Der Trennwandabschluss 8 erstreckt sich radial vom äußeren Ende 7 der Trennwand 6 bis zur Außenwand 9 des Fluidisierungsapparates 1, insbesondere bis zur Innenwandung 9 der Außenwand 10. Die Trennwände 6 erstrecken vom Anströmboden 2 bis zu einer beliebigen Höhe im Fluidisierungsapparat 1, die an den jeweiligen Herstellungs- oder Behandlungsprozess im Fluidisierungsapparat 1 anpassbar ist. Die Trennwände 6 unterteilen die Wirbelkammer 3 in Prozesskammern 11. Im Ausführungsbeispiel weist der Fluidisierungsapparat 1 zehn Prozesskammern 11 auf.

Der erfindungsgemäße Anströmoden 2 weist drei Anströmbodenplatten 12a bis 12c auf, wobei die unterste Anströmbodenplatte 12c auch als Unterboden und die mittlere Anströmbodenplatte 12b als Dichtungsboden bezeichnet werden. Der Durchmesser 13 der oberen und unteren Anströmbodenplatte 12a und 12c ist im Vergleich zum Durchmesser 14 der mittleren Anströmbodenplatte 12b kleiner. Die beiden Anströmbodenplatten 12a und 12c sind in der Regel aus Stahl, insbesondere Edelstahl, oder dergleichen ausgebildet. Zwischen der oberen und der unteren Anströmbodenplatte 12a und 12c und der Innenwandung 9 der Außenwand 10 des Fluidisierungsapparates 1 bildet sich ein Ringspalt 15 aus.

Im Gegensatz hierzu ist die mittlere Anströmbodenplatte 12b in der Regel aus Polytetrafluorethylen (PTFE) oder einem diesem ähnlichen Material, wie bspw. Polychlortrifluorethylene (PCTFE) oder Tetrafluorethylen-perfluoropropylen (FEP), hergestellt. Durch ihren größeren Durchmesser 14 dichtet die mittlere Anströmbodenplatte 12b den Ringspalt 15 zwischen der oberen und der unteren Anströmbodenplatte 12a und 12c und der Innenwandung 10 der Außenwand 9 des Fluidisierungsapparates 1 ab. Die mittlere Anströmbodenplatte 12b bildet im Ausführungsbeispiel ein den Ringspalt 15 abdichtendes Dichtelement 16 am äußeren Ende 17 der mittleren Anströmbodenplatte 12b selbst aus. Bspw. könnte aber an der mittleren Anströmbodenplatte 12b auch ein Dichtelement 16 angeordnet sein, das als zweites Bauteil ausgebildet ist. Besonders bevorzugt ist, wie im Ausführungsbeispiel dargestellt, das Dichtelement 16 über einen Umfang am äußeren Ende 17 der mittleren Anströmbodenplatte 12b ausgebildet. Eine um den gesamten Umfang einer der Anströmbodenplatten 12b angeordnetes Dichtelement 16 verbessert die Abdichtung des Anströmbodens 2 gegenüber der Außenwand 9 des Fluidisierungsapparates 1.

Das für die Herstellung des mittleren Anströmbodens 2 in der Regel verwendete Polytetrafluorethylen (PTFE) weist einen sehr niedrigen Reibungskoeffizienten auf, wodurch die den Ringspalt 15 zwischen Anströmboden 2 und der Innenwandung 9 der Außenwand 10 des Fluidisierungsapparates 1 abdichtende Anströmbodenplatte 12b bei der Drehung des Anströmbodens 2 um die Mittelachse Z nur wenig belastet wird und der Verschleiß dementsprechend gering ist. Außerdem ist die Haftreibung genauso bei PTFE in etwa so groß wie die Gleitreibung, so dass der Übergang vom Stillstand des erfindungsgemäßen Anströmbodens 2 beim Stillstand des Fluidisierungsapparates 1 zur Bewegung des Anströmbodens 2 beim Betrieb des Fluidisierungsapparates 1 ohne "Ruck" stattfindet.

Der im Ausführungsbeispiel drei Anströmbodenplatten 12a bis 12c aufweisende Anströmboden 2 erzeugt einen Druckverlust für die durch den Anströmboden 2 strömende Prozessluft. Prozessluft bezeichnet ein gasförmiges Medium, das die im Fluidisierungsapparat 1 zu behandelnden Materialien, insbesondere Partikel oder Granulate, fluidisiert. Aufgrund der mittleren Anströmbodenplatte 12b, die gegenüber der Außenwand 10 des Fluidisierungsapparates 1 abdichtet und diesen in eine nicht dargestellte Verteiler- und eine Wirbelkammer 3 unterteilt, strömt die Prozessluft ausschließlich durch Öffnungen 18 im Anströmboden 2 von der Verteilerkammer in die Wirbelkammer 3. Die Öffnungen 18 der drei den Anströmboden 2 bildenden Anströmbodenplatten 12a bis 12c weisen im Ausführungsbeispiel unterschiedliche Durchtrittsflächen auf. Hierdurch ist der Druckverlust des Anströmbodens 2 sehr genau auf jedes herzustellende Produkt einstellbar.

Zur besseren Darstellung der Öffnungen 18 ist der erfindungsgemäße Anströmboden 2 in drei Sektoren I, II und III unterteilt. Die Öffnungen 18a der oberen Anströmbodenplatte 12a sind hierbei im Sektor I, die Öffnungen 18b der mittleren Anströmbodenplatte 18b sind im Sektor II und die Öffnungen 18c der unteren Anströmbodenplatte 12c sind im Sektor III gezeigt. Im Ausführungsbeispiel nimmt die Durchtrittfläche der Anströmbodenplatten 12a bis 12c von der unteren Anströmbodenplatte 12c zur oberen Anströmbodenplatte 12a hin ab. Beispielsweise sind die Öffnungen 18a in der oberen Anströmbodenplatte 12a als sehr dünne Schlitze mit einer Breite von 0,2 mm ausgebildet. Hierdurch ist der Druckverlust so groß, dass ein in die Prozesskammer 11 eintretendes Material sofort fluidisiert wird und somit von Anfang an, d.h. mit Eintritt in den Fluidisierungsapparat optimal fluidisiert wird.

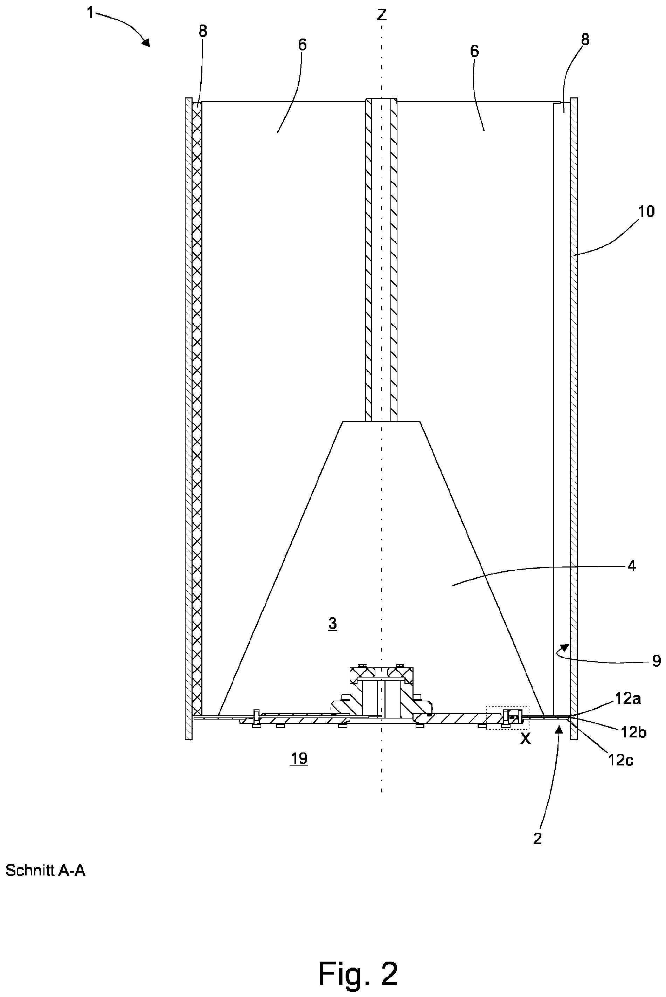

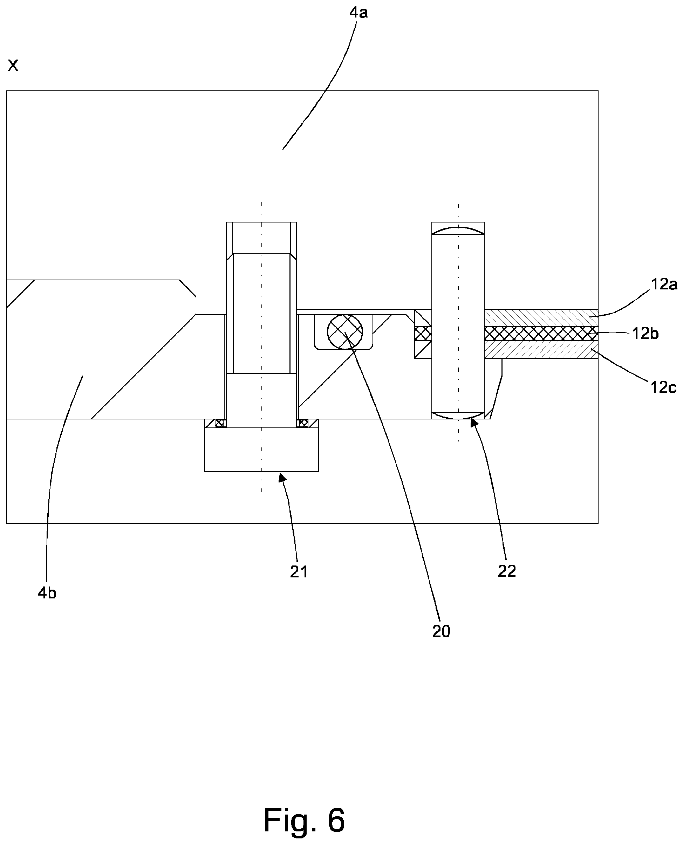

Fig. 2 stellt eine Seitenansicht eines Teils eines Fluidisierungsapparates 1 mit einem erfindungsgemäßen Anströmboden 2 im Vollschnitt entlang der in Fig. 1 gezeigten Schnittachse A-A dar. Der Fluidisierungsapparat 1 ist durch den erfindungsgemäßen Anströmboden 2 in die Wirbelkammer 3 und die Verteilerkammer 19 unterteilt. Die Anströmbodenplatten 12a bis 12c sind am Verdrängungskörper 4 angeordnet. Eine Detailansicht der Befestigung der Anströmbodenplatten 12a bis 12c am Verdrängungskörper 4 gemäß Ausschnitt X wird in Fig. 6 dargestellt und erläutert. Die drei Anströmbodenplatten 12a bis 12c erstrecken sich nicht über den gesamten Durchmesser 13, 14, sondern sind unterhalb des Verdrängungskörpers 4 mit diesem verbunden. Die Anströmbodenplatten 12a bis 12c sind alle lösbar miteinander verbunden und einzelnen austauschbar am Verdrängungskörper 4 angeordnet.

Am sich um eine Mittelachse Z drehenden Verdrängungskörper 4 sind Trennwände 6 angeordnet, die Trennwandabschlüsse 8 aufweisen. Der Trennwandabschluss 8 erstreckt sich vom äußeren Ende 7 der Trennwand 6 bis zur Innenwandung 9 der Außenwand 10 des Fluidisierungsapparates 1. Die Trennwände 6 erstrecken sich vom drei Anströmbodenplatten 12a bis 12c aufweisenden Anströmboden 2 über die gesamte Höhe des Fluidisierungsapparates 1. Am oberen Ende des Fluidisierungsapparates 1 wird die von der Verteilerkammer 19 in Richtung Wirbelkammer 3 durch den Anströmboden 2 strömende Prozessluft vorzugsweise durch hier nicht dargestellte Filter abgereinigt.

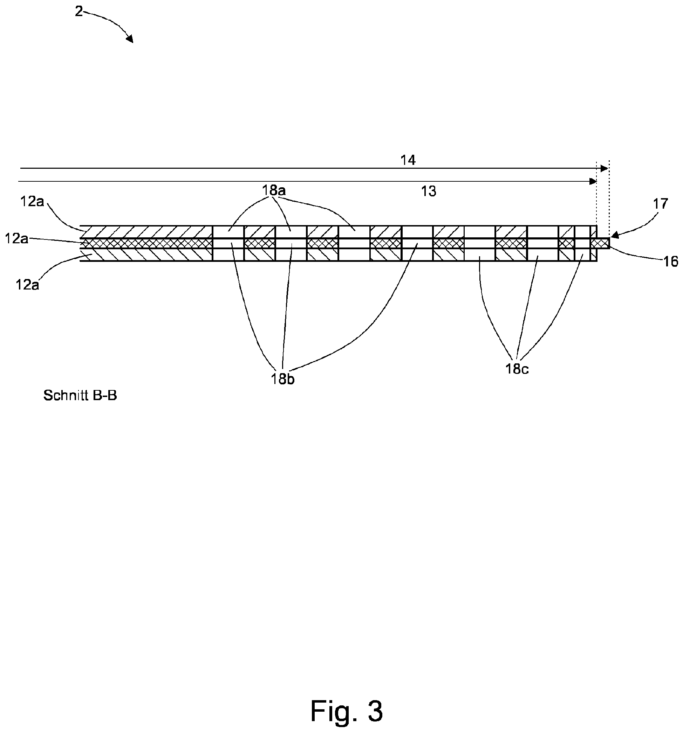

Eine Seitenansicht eines erfindungsgemäßen drei Anströmbodenplatten 12a bis 12c aufweisenden Anströmbodens 2 im Vollschnitt entlang des in Fig. 1 gezeigten Schnittachse B-B ist in Fig. 3 dargestellt. Die mittlere Anströmbodenplatte 12b weist einen im Vergleich zu der oberen und unteren Anströmbodenplatte 12a und 12c größeren Durchmesser 14 auf. Im dargestellten Ausführungsbeispiel bildet die mittlere Anströmbodenplatte 12b dadurch an ihrem äußeren Ende 17 das Dichtelement 16 aus. Die Öffnungen 18a bis 18c der Anströmbodenplatten 12a bis 12c sind im Ausführungsbeispiel übereinander angeordnet, wobei gemäß Fig. 1 die Öffnungen 18a der Anströmbodenplatte 12a eine hier nicht dargestellte geringere Breite im Vergleich zu den Öffnungen 18b und 18c aufweisen.

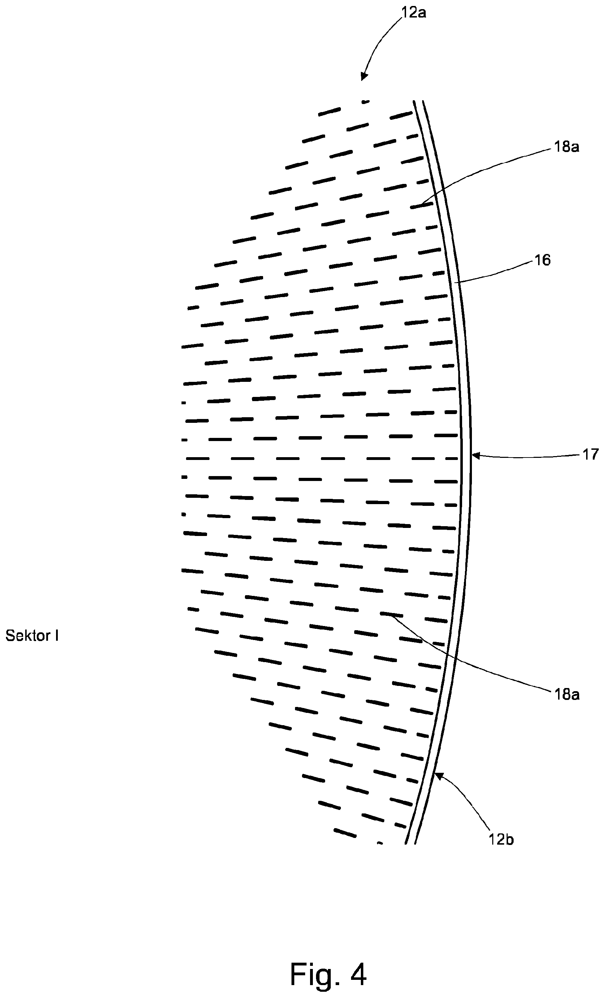

Fig. 4 zeigt eine Draufsicht auf einen Teil einer oberen Anströmbodenplatte 12a des in Fig. 3 dargestellten drei Anströmbodenplatten 12a bis 12c aufweisenden Anströmbodens 2. Die Öffnungen 18a sind hierbei bevorzugt als Schlitze ausgebildet mit einer Breite von 0,2 mm ausgebildet. Zudem wird die mittlere Anströmbodenplatte 12b dargestellt, wobei deren äußeres Ende 17 ein Dichtelement 16 ausbildet, das den Ringspalt 15 zwischen erfindungsgemäßem Anströmboden 2 und der Innenwandung 9 der Außenwand 10 des Fluidisierungsapparates 1 abdichtet.

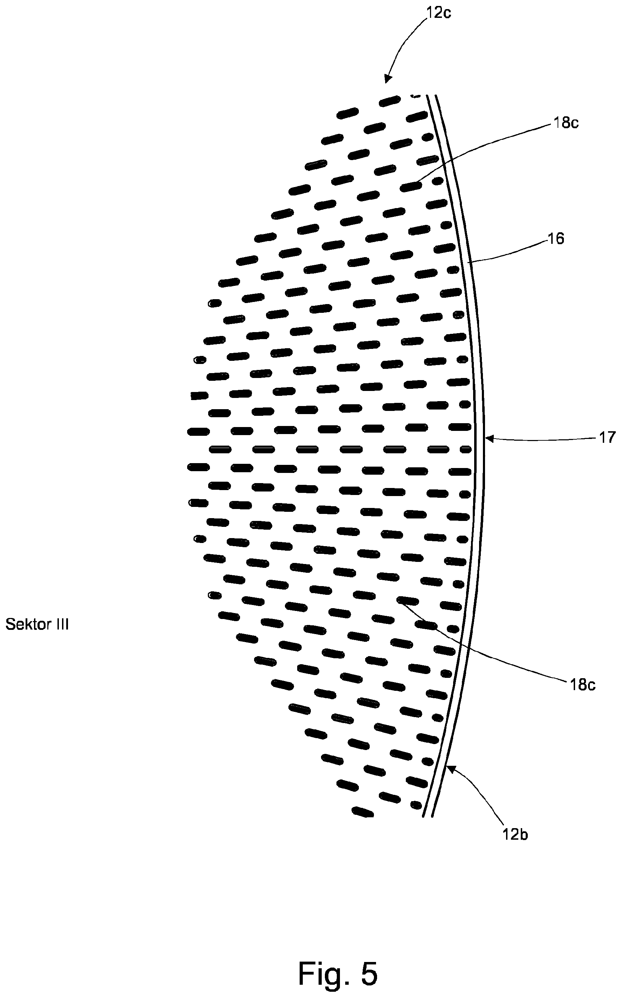

In Fig. 5 ist eine Untersicht auf einen Teil einer unteren Anströmbodenplatte 12c des in Fig. 3 dargestellten drei Anströmbodenplatten 12a bis 12c aufweisenden Anströmbodens 2 gezeigt. Die Öffnungen 18c sind hierbei ebenfalls bevorzugt als Schlitze ausgebildet, wobei die Schlitze des unteren Anströmbodenplatte 12c breiter sind als die Schlitze der oberen Anströmbodenplatte 12a, sodass eine Durchtrittsfläche der Öffnungen 16c für die Prozessluft größer ist als eine Durchtrittsfläche der Öffnungen 18a. Zudem wird die mittlere Anströmbodenplatte 12b dargestellt, wobei deren äußeres Ende 17 ein Dichtelement 16 ausbildet, das den Ringspalt 15 zwischen erfindungsgemäßem Anströmboden 2 und der Innenwandung 9 der Außenwand 10 des Fluidisierungsapparates 1 abdichtet.

Eine Detailansicht einer in Ausschnitt X gemäß Fig. 2 gezeigten Befestigung des erfindungsgemäßen Anströmbodens 2 an einem Verdrängungskörper 4 ist in Fig. 6 gezeigt. Die Anströmbodenplatten 12a bis 12c sind zwischen einem Verdrängungskörperoberteil 4a und einem mit diesem durch ein Dichtelement 20, insbesondere einem O-Ring, einer Flachdichtung oder dergleichen, abgedichteten Verdrängungskörperunterteil 4b mittels eines Befestigungsmittels 21, insbesondere einer Schraube oder dergleichen, angeordnet. Die Anströmbodenplatten 12a, 12b und 12c sind mittels eines Befestigungsmittels 22, bevorzugt einem Bolzen oder dergleichen, mit dem Verdrängungskörper 4 verbunden.

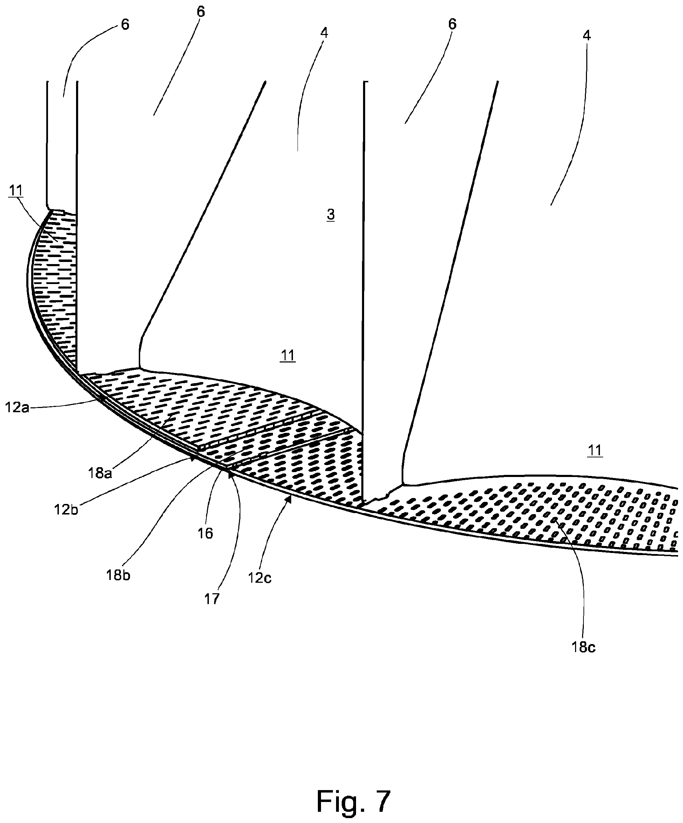

Fig. 7 stellt eine perspektivische Darstellung eines drei Anströmbodenplatten 12a bis 12c aufweisenden erfindungsgemäßen Anströmbodens 2 des Fluidisierungsapparates 1 im Teilschnitt dar. Der drei Anströmbodenplatten 12a bis 12c aufweisende Anströmboden 2 ist am Trennwände 6 umfassenden Verdrängungskörper 4 des Fluidisierungsapparates 1 angeordnet. Durch die Trennwände 6 wird die Wirbelkammer 3 des Fluidisierungsapparates 1 in Prozesskammern 11 unterteilt. Zur vereinfachten Darstellung wurden in Fig. 7 die drei Anströmbodenplatten 12a bis 12c des Anströmbodens 2 nicht durchgängig dargestellt.

Die untere Anströmbodenplatte 12c hat die Funktion der Halterung und Stabilisierung der als Dichtungsboden ausgebildeten mittleren Anströmbodenplatte 12b. Vorzugsweise wird die untere Anströmbodenplatte 12c ebenso wie die obere Anströmbodenplatte 12a aus Stahl, insbesondere Edelstahl, hergestellt. Die als Dichtungsboden ausgebildete Anströmbodenplatte 12b ist bevorzugt aus Polytetrafluorethylen (PTFE) oder dergleichen hergestellt. Damit die mittlere Anströmbodenplatte 12b als Dichtungsboden nutzbar ist, muss diese entweder einen im Vergleich zu der unteren und oberen Anströmbodenplatte 12a bzw. 12c größeren Durchmesser 14 aufweisen oder an ihrem äußeren Ende 17 ein nicht dargestelltes Dichtelement umfassen. Im Ausführungsbeispiel bildet die mittlere Anströmbodenplatte 12b aufgrund ihres größeren Durchmessers 14 im Vergleich zu den Anströmbodenplatten 12a und 12c das Dichtelement 16 an ihrem äußeren Ende 17 selbst aus.

Die obere Anströmbodenplatte 12a des im Fluidisierungsapparat 1 angeordneten Anströmbodens 2 weist in der im Ausführungsbeispiel dargestellten bevorzugten Ausführungsform kleinere Öffnungen 18a, insbesondere in Schlitzform mit einer Breite von 0,2 mm, auf. Durch die Öffnungen 18a bis 18c der Anströmbodenplatten 12a bis 12c, insbesondere durch die obere Anströmbodenplatte 12a, wird der über dem Anströmboden 2 erzeugte Druckverlust eingestellt. Bei einer optimalen Einstellung des über dem Anströmboden 2 erzeugten Druckverlusts wird das zu behandelnde Material, insbesondere Partikel oder Granulat, optimal fluidisiert, d.h. die Prozessluft fluidisiert auch das erzeugte, feuchte in die Prozesskammer 11 eintretende Granulat.

Durch eine derartige Ausgestaltung des im Fluidisierungsapparat 1 angeordneten Anströmbodens 2, insbesondere durch die als Dichtungsboden ausgebildete mittlere Anströmbodenplatte 12b, kann dieser im Fluidisierungsapparat 1 um eine Mittelachse Z gedreht werden und gleichzeitig ohne Abnutzungserscheinungen zu zeigen die Verteilerkammer 19 von der Wirbelkammer 3 sowie den Anströmboden 2 gegenüber der Innenwandung 9 der Außenwand 10 des Fluidisierungsapparates 1 abdichten.

## Patentansprüche

1. Fluidisierungsapparat (1) aufweisend einen für Prozessluft durchlässigen Anströmboden (2) mit Öffnungen (18) für die durch den Anströmboden (2) strömende Prozessluft, wobei der Anströmboden (2) um eine Achse Z des Fluidisierungsapparates (1) drehbar in dem Fluidisierungsapparat (1) angeordnet ist und diesen in eine Verteilerkammer (19) und eine Wirbelkammer (3) unterteilt, und wobei der Anströmboden (2) des Fluidisierungsapparates (1) zumindest eine erste und eine zweite Anströmbodenplatte (12a, 12b, 12c) aufweist, wobei eine der Anströmbodenplatten (12a, 12b, 12c) an ihrem äußeren Ende (17) ein Dichtelement (16) aufweist oder ausbildet, **dadurch gekennzeichnet, dass** zwischen Anströmboden (2) und einer Innenwandung (9) einer Außenwand (10) des Fluidisierungsapparates (1) ein Ringspalt (15) ausgebildet ist und das Dichtelement (16) über einen Umfang am äußeren Ende (17) der einen Anströmbodenplatte (12a, 12b, 12c) angeordnet oder ausgebildet ist, sodass das Dichtelement (16) den Ringspalt (15) abdichtet.

2. Fluidisierungsapparat (1) nach Anspruch 1, **dadurch gekennzeichnet, dass** der Anströmboden (2) des Fluidisierungsapparates (1) drei Anströmbodenplatten (12a, 12b, 12c) umfasst.

3. Fluidisierungsapparat (1) nach Anspruch 1 oder 2, **dadurch gekennzeichnet, dass** die eine ein Dichtelement (16) ausbildende Anströmbodenplatte (12a, 12b, 12c) aus Polytetrafluorethylen hergestellt ist.

4. Fluidisierungsapparat (1) nach einem der vorhergehenden Ansprüche, **dadurch gekennzeichnet, dass** die Anströmbodenplatten (12a, 12b, 12c) unbeweglich zueinander verbindbar oder verbunden sind.

5. Fluidisierungsapparat (1) nach einem der vorhergehenden Ansprüche, **dadurch gekennzeichnet, dass** die Öffnungen (18a, 18b, 18c) der einzelnen Anströmbodenplatten (12a, 12b, 12c) des Anströmbodens (2) eine unterschiedliche Durchtrittsfläche für die Prozessluft aufweisen.

## Claims

1. A fluidization apparatus (1) comprising an air distribution plate (2) permeable to process air with openings (18) for the process air flowing through the air distribution plate (2), wherein the air distribution plate (2) is rotatably arranged in the fluidization apparatus (1) about an axis Z of the fluidization apparatus (1) and divides it into a distribution chamber (19) and a fluidization chamber (3), and wherein the air distribution plate (2) of the fluidization apparatus (1) comprises at least a first and a second air distribution bottom plate (12a, 12b, 12c), wherein one of the air distribution bottom plates (12a, 12b, 12c) comprises or forms a sealing element (16) at its outer end (17), **characterized in that** an annular gap (15) is formed between the air distribution plate (2) and an inner wall (9) of an outer wall (10) of the fluidization apparatus (1), and the sealing element (16) is arranged or formed over a circumference at the outer end (17) of the one air distribution bottom plate (12a, 12b, 12c), such that the sealing element (16) seals the annular gap (15).

2. A fluidization apparatus (1) according to claim 1, **characterized in that** the air distribution plate (2) of the fluidization apparatus (1) comprises three air distribution bottom plates (12a, 12b, 12c).

3. A fluidization apparatus (1) according to claim 1 or 2, **characterized in that** the one air distribution bottom plate (12a, 12b, 12c) forming a sealing element (16) is made of polytetrafluoroethylene.

4. A fluidization apparatus (1) according to one of the preceding claims, **characterized in that** the air distribution bottom plates (12a, 12b, 12c) are connectable or connected to one another immovably.

5. A fluidization apparatus (1) according to one of the preceding claims, **characterized in that** the openings (18a, 18b, 18c) of the individual air distribution bottom plates (12a, 12b, 12c) of the air distribution plate (2) have a different passage area for the process air.

## Revendications

1. Appareil de fluidisation (1) présentant un fond d'écoulement (2) perméable à l'air de processus avec des ouvertures (18) pour l'air de processus circulant à travers le fond d'écoulement (2), dans lequel le fond d'écoulement (2) est disposé dans l'appareil de fluidisation (1) de manière à pouvoir tourner autour d'un axe Z de l'appareil de fluidisation (1) et le divise en une chambre de distribution (19) et en une chambre de turbulence (3), et dans lequel le fond d'écoulement (2) de l'appareil de fluidisation (1) présente au moins une première et une deuxième plaque de fond d'écoulement (12a, 12b, 12c), dans lequel une des plaques de fond d'écoulement (12a, 12b, 12c) présente ou forme un élément d'étanchéité (16) sur son extrémité extérieure (17), **caractérisé en ce qu'**une fente annulaire (15) est formée entre le fond d'écoulement (2) et une cloison intérieure (9) d'une paroi extérieure (10) de l'appareil de fluidisation (1) et l'élément d'étanchéité (16) est disposé ou formé sur une périphérie sur l'extrémité extérieure (17) d'une plaque de fond d'écoulement (12a, 12b, 12c), si bien que l'élément d'étanchéité (16) assure l'étanchéité de la fente annulaire (15).

2. Appareil de fluidisation (1) selon la revendication 1, **caractérisé en ce que** le fond d'écoulement (2) de l'appareil de fluidisation (1) comprend trois plaques de fond d'écoulement (12a, 12b, 12c).

3. Appareil de fluidisation (1) selon la revendication 1 ou 2, **caractérisé en ce que** la plaque de fond d'écoulement (12a, 12b, 12c) formant un élément d'étanchéité (16) est fabriquée en polytétrafluoroéthylène.

4. Appareil de fluidisation (1) selon l'une quelconque des revendications précédentes, **caractérisé en ce que** les plaques de fond d'écoulement (12a, 12b, 12c) peuvent être reliées ou sont reliées entre elles de manière fixe.

5. Appareil de fluidisation (1) selon l'une quelconque des revendications précédentes, **caractérisé en ce que** les ouvertures (18a, 18b, 18c) des diverses plaques de fond d'écoulement (12a, 12b, 12c) du fond d'écoulement (2) présentent une surface de passage différente pour l'air de processus.
